# EUROPEAN PATENT APPLICATION

(11) **EP 4 756 878 A2**
(43) Date of publication of application: **10.06.2026**
(21) Application number: 25209098.0
(22) Date of filing: 16.10.2025
(51) Int. Cl.: H01M 4/00

(54) **SECONDARY BATTERY, BATTERY PACK, ENERGY STORAGE SYSTEM AND ELECTRIC APPARATUS**

(30) Priority: 31.03.2025 CN 202510401781
(71) Applicant: Zhejiang Jinko Energy Storage Co., Ltd., Jiaxing, Zhejiang 314415 (CN)
(72) Inventor: CHEN, Lili, Haining City, Jiaxing, Zhejiang 314415 (CN); YANG, Zixiang, Haining City, Jiaxing, Zhejiang 314415 (CN); DONG, Yanying, Haining City, Jiaxing, Zhejiang 314415 (CN); CHEN, Shoumin, Haining City, Jiaxing, Zhejiang 314415 (CN); WANG, Xiangming, Haining City, Jiaxing, Zhejiang 314415 (CN); ZHANG, Luhua, Haining City, Jiaxing, Zhejiang 314415 (CN)
(74) Representative: Herrero & Asociados, S.L.

(57) **Abstract**

The present invention relates to a secondary battery and a method for preparing the same, a battery pack, an energy storage system, and an electric apparatus. The secondary battery includes cathode active particles. The cathode active particles include a core and a carbon layer coating the core, and the core includes at least one of a lithium transition metal phosphate and a lithium transition metal oxide. Part of the cathode active particles are cracked, an average width of cracks is in a range of 10 nm to 30 nm, and an average length thereof is in a range of 300 nm to 800 nm.

## Description

### TECHNICAL FIELD

The present invention relates to the field of energy storage technology, and particularly to a secondary battery, a battery pack, an energy storage system, and an electric apparatus.

### BACKGROUND

The large-scale use of traditional fossil fuels has led to increasingly serious problems such as resource shortages and environmental pollution. It is of great significance to accelerate the transformation of energy structure and develop clean and renewable new energy. Secondary batteries such as lithium-ion batteries are widely used in 3C products, energy storage systems, and power batteries due to their advantages of high energy density, long cycle life, good rate capability, and low cost. How to further improve the energy density, cycle life, and safety performance of secondary batteries has also become a research hotspot in the field of secondary batteries. At present, it is difficult for secondary batteries to achieve both high capacity and long-cycle performance, which limits their application in the field of energy storage.

### SUMMARY

Accordingly, it is necessary to provide a secondary battery and a method for preparing the same, a battery pack, an energy storage system and an electric apparatus to solve the problem that secondary batteries are difficult to achieve both high capacity and long-cycle performance.

In a first aspect of the present invention, a secondary battery is provided, including cathode active particles. The cathode active particles include a core and a carbon layer coating the core, and the core includes at least one of a lithium transition metal phosphate and a lithium transition metal oxide.

Part of the cathode active particles are cracked, an average width of cracks of a cracked cathode active particle is in a range of 10 nm to 30 nm, and an average length thereof is in a range of 300 nm to 800 nm.

In some embodiments, 2.5% to 8% of the cathode active particles are cracked.

In some embodiments, a compaction density of the cathode active particles is in a range of 2.4 g/cm³ to 2.8 g/cm³.

In some embodiments, a D10 particle size of the cathode active particles is in a range of 0.3 µm to 0.6 µm, a D50 particle size thereof is in a range of 0.6 µm to 1.2 µm, and a D90 particle size thereof is in a range of 2 µm to 4 µm.

In some embodiments, a specific surface area of the cathode active particles is ≥10.63 m²/g and a pore volume thereof is ≥0.0052 cm³/g.

In a second aspect of the present invention, a method for preparing a secondary battery is provided, including the following steps:
providing a precursor, wherein the precursor includes a core and a carbon layer coating the core, and the core includes at least one of a lithium transition metal phosphate and a lithium transition metal oxide;
subjecting the precursor to a staged compaction treatment to obtain cathode active particles; and
assembling the cathode active particles to obtain the secondary battery.

Part of the cathode active particles are cracked, an average width of cracks of a cracked cathode active particle is in a range of 10 nm to 30 nm, and an average length thereof is in a range of 300 nm to 800 nm.

In some embodiments, the staged compaction treatment is performed at a pressure of 360 MPa to 372 MPa for a total time of 300 s to 750 s.

In some embodiments, the staged compaction treatment includes at least three stages of compaction treatment, and a pressure of a subsequent stage of compaction treatment is no less than a pressure of a previous stage of compaction treatment.

In some embodiments, the staged compaction treatment includes a five-stage compaction treatment, including the following steps:
maintaining a pressure of 360 MPa to 362 MPa for 100 s to 150 s;
maintaining a pressure of 362 MPa to 364 MPa for 100 s to 150 s;
maintaining a pressure of 364 MPa to 366 MPa for 100 s to 150 s;
maintaining a pressure of 366 MPa to 368 MPa for 100 s to 150 s; and
maintaining a pressure of 368 MPa to 372 MPa for 100 s to 150 s.

In some embodiments, the core includes a lithium iron phosphate material, and a method for preparing the precursor includes the following steps:
mixing a lithium phosphate, a ferrous salt, a surfactant, and a solvent to obtain a mixed solution;
subjecting the mixed solution to a heat treatment to obtain a reactive slurry;
subjecting the reactive slurry to cooling, washing, filtering and drying treatments to obtain a powder; and
mixing the powder and a carbon source and performing a calcination treatment to obtain the precursor.

In some embodiments, the lithium phosphate includes at least one of lithium phosphate, dilithium hydrogen phosphate, and lithium dihydrogen phosphate.

In some embodiments, the ferrous salt includes at least one of ferrous sulfate, ferrous chloride, ferrous acetate, and ferrous oxalate.

In some embodiments, a molar ratio of phosphorus in the lithium phosphate to iron in the ferrous salt is in a range of (1-1.2):2.

In some embodiments, the surfactant includes at least one of alkylbenzene sulfonate, alkyl sulfonate, α-olefin sulfonate, alkylnaphthalene sulfonate, lignin sulfonate, succinate sulfonate, fatty alcohol sulfate, and fatty alcohol polyoxyethylene ether sulfate.

In some embodiments, a mass fraction of the surfactant in the mixed solution is in a range of 1% to 2%.

In some embodiments, the carbon source includes at least one of glucose, sucrose, fructose, ascorbic acid, polyethylene glycol, and polyvinyl alcohol.

In some embodiments, a molar ratio of the powder to the carbon source is in a range of 1: (1.5-2.5).

In some embodiments, the heat treatment includes: heating the mixed solution in a water bath at 120°C to 180°C for 12 h to 18 h.

In some embodiments, the drying treatment includes: vacuum drying the reactive slurry at 50°C to 100°C for 10 h to 24 h;

In some embodiments, the calcination treatment includes: calcining the powder and the carbon source at 500°C to 900°C for 8 h to 12 h in a protective atmosphere.

In a third aspect of the present invention, a battery pack is provided, including a battery box and a plurality of secondary batteries arranged in the battery box. The plurality of secondary batteries include the secondary battery as described above, or a secondary battery prepared by the method as described above.

In a fourth aspect of the present invention, an energy storage system is provided, including the battery pack as described above.

In a fifth aspect of the present invention, an electric apparatus is provided, including the energy storage system as described above.

In the prior art, cathode active materials with high compaction density are generally achieved by compaction treatment, so as to increase the capacity of batteries. Despite the compaction treatment, the compaction density of current cathode active materials is still relatively low, which reduces the conductivity of the material, affects the consistency and uniformity of the cathode active layer, and limits the energy density of batteries. This is because conventional compaction treatment needs to avoid cracking of the cathode active particles as much as possible. On the one hand, cracks on the surface of the particles will affect the coating effect of the carbon layer, resulting in poor conductivity of the material, which is not conducive to improving the discharge specific capacity. On the other hand, the electrolyte will enter the interior of the particles along the cracks, increasing interfacial side reactions and causing the structural stability, thermal stability and cycle stability of the material to decrease at the same time, ultimately leading to the degradation of cycle performance of batteries.

However, the inventor has discovered through research that by causing some of the cathode active particles to crack, cracks having an average width of 10 nm to 30 nm and an average length of 300 nm 800 nm are formed on the surface of the cracked particles, which can expose the electrochemical reaction active sites of the core, facilitate the intercalation and deintercalation of lithium ions during the charging and discharging process, thus the kinetic properties of the material can be improved. While some particles form cracks of appropriate sizes, the cathode active particles show a higher compaction density, which is beneficial to improving the discharge specific capacity of batteries, and the structural stability of the particles remains basically consistent. The improvement in kinetic properties and the increase in active sites are sufficient to compensate for the difference in conductivity caused by the cracking of the carbon layer. Overall, it can effectively avoid the reduction of battery cycle performance. Therefore, the secondary battery provided according to the present invention has good cycle performance while improving the discharge specific capacity, which is beneficial to wide application in the field of energy storage.

### BRIEF DESCRIPTION OF THE DRAWINGS

To illustrate the technical solutions according to the embodiments of the present invention more clearly, and to understand the present invention and its beneficial effects more completely, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of a method for preparing a secondary battery according to an embodiment;
FIG. 2 is a flow chart of a method for preparing a precursor according to an embodiment;
FIG. 3 is a comparison diagram of XRD of the cathode active particles of Example 1 and Comparative Example 1;
FIG. 4 is a SEM image of the cathode active particles of Example 1; and
FIG. 5 is a SEM image of the cathode active particles of Comparative Example 1.

### DETAILED DESCRIPTION

In order to facilitate the understanding of the present invention, the present invention will be further described in detail below with reference to specific embodiments. However, the present invention may be embodied in many different forms and is not limited to the embodiments described herein. Rather, these embodiments are provided so that the understanding of the content of the present invention will be more thorough.

All technical and scientific terms used herein have the same meaning as commonly understood by one of ordinary skill in the art to which the present invention applies, unless otherwise defined. The terms used in the specification of the present invention herein are for the purpose of describing specific embodiments only and are not intended to limit the present invention.

In the present invention, "and/ or" includes any and all combinations of one or more of the associated listed items. "At least one" means more than or equal to one, such as one, two, and more than two. "Multiple" or "several" means at least two, such as two, three, etc., and "multiple layers" means at least two layers, such as two layers, three layers, etc., unless otherwise specifically defined. In the description of the present invention, "a plurality of" means at least one, such as one, two, etc., unless otherwise specifically defined.

When a numerical range is disclosed in the present invention, the range is considered continuous and includes the minimum and maximum values of the range and every value therebetween. Further, when a range refers to integers, every integer between the minimum and maximum values of the range is included. Furthermore, when multiple ranges are provided to describe a feature or property, the ranges can be combined. In other words, all ranges disclosed in the present invention shall to be understood as encompassing any and all sub-ranges subsumed therein, unless otherwise indicated.

All steps of the present invention can be performed sequentially or randomly, unless otherwise specified. For example, when it is referred to that the method includes steps (a) and (b), it means that the method may include steps (a) and (b) that are performed sequentially, or may include steps (b) and (a) that are performed randomly. For example, when it is referred to that the method can further include step (c), it means that step (c) may be added to the method in any order, for example, the method may include steps (a), (b), and (c), or steps (a), (c), and (b), or steps (c), (a), and (b), etc.

In the present invention, "above" or "below" includes the referred number itself. For example, when it is referred to below 1, 1 is included.

The temperature parameters in the present invention are allowed to be constant-temperature treatment or to vary within a certain temperature range, unless otherwise specified. It should be understood that the constant-temperature treatment described allows the temperature to fluctuate within the precision of the instrument control. Fluctuations within the range of ±5°C, ±4°C, ±3°C, ±2°C, and ±1°C are allowed.

In the present invention, room temperature refers to indoor temperature, normal temperature, or general temperature. In general, the room temperature may range from any of the following temperature intervals: 23°C±2°C, 25°C±5°C, or 20°C±5°C.

### Terms

Unless otherwise specified or contradicted, the terms and phrases used herein shall have the following meanings:
Compaction density: refers to the ratio of the areal density and thickness of a material, with the unit of g/cm³. Generally, the greater the compaction density, the higher the battery capacity. Therefore, compaction density is also regarded as one of the reference indicators of energy density.
Particle size: for spherical particles, refers to the diameter of the spherical particles; for non-spherical particles, refers to the equivalent particle size of the non-spherical particles (generally referred to as the particle size), which can be obtained by using a scanning electron microscope (SEM) or a laser particle size analyzer. The equivalent particle size means that when a certain physical property of a particle is the same or similar to that of a homogeneous spherical particle, the diameter of the spherical particle is used to represent the diameter of the actual particle. The particle sizes in the present invention represent equivalent particle sizes, unless otherwise specified or contradicted.
Particle size distribution parameters: in the particle size distribution curve, the particle size corresponding to the cumulative particle size distribution percentage reaching N% is called the DN particle size, which means that the particles smaller than this particle size account for N% of all particles, where N=0 to 100. When N = 100, the D100 particle size refers to the particle size corresponding to the cumulative particle size distribution percentage reaching 100%. When N = 50, the D50 particle size refers to the particle size corresponding to the cumulative particle size distribution percentage reaching 50%, which represents the median particle size or median diameter, indicating that particles smaller and larger than this particle size each account for 50%. For example, when D50 particle size = 1 mm, it means that particles with a size smaller than 1 mm and particles with a size larger than 1 mm each account for 50% of all particles. DN particle size can be measured by a laser particle size analyzer.
Span: the calculation formula thereof is: Span = (D90-D10) ÷ D50. The smaller the span, the more concentrated the particle size distribution is; the larger the span, the greater the difference in particle size is and the more dispersed the distribution is.
Specific surface area: refers to the total area per unit mass of solid material, with the unit of m²/g, which can be characterized in accordance with GB/T 19587-2004.
Pore volume (Vg): refers to the total volume of pores per unit mass of porous material, with the unit of cm³/g. Pore volume can be determined by the carbon tetrachloride method, that is, under a certain vapor pressure of carbon tetrachloride, carbon tetrachloride condenses and fills the pores of the porous material, at which time the volume of the condensed carbon tetrachloride is the pore volume of the porous material.

With the rapid development of new energy technologies, based on the improving requirements for energy density, cycle life and safety performance of secondary batteries, the improvement of the performance of cathode active materials has become a research hotspot in the field of batteries.

The compaction density of powder is of great significance in the application of cathode and anode active materials, mainly in the following aspects. (1) High compaction density increases the density of active materials, the voids between powder particles are reduced after compaction treatment, and the content of active materials per unit volume is increased, which is beneficial to improving the capacity and energy density of batteries. (2) The reduction of voids between powder particles is also beneficial to reducing the contact resistance between particles and improving the electron transmission path, thus improving the conductivity of materials. (3) High compaction density can optimize the distribution of powder particles, promote uniform distribution of particles, reduce the problem of slurry agglomeration in the subsequent plate coating and rolling process, and optimize processing performance, thereby improving the consistency and uniformity of the plate. (4) In the slurry coating process, active materials with high compaction density are easier to mix evenly with conductive agents and binders, and the uniformity and consistency of the slurry can be improved, thereby reducing defects in the active layer. However, it is difficult for traditional secondary batteries to achieve both high capacity and long-cycle performance, which limits their application in the field of energy storage.

Accordingly, in a first aspect of the present invention, a secondary battery is provided, aiming to solve the problem that traditional secondary batteries are difficult to achieve both high capacity and long cycle performance, so as to promote their wide application in the field of energy storage.

In some embodiments, the secondary battery includes cathode active particles. The cathode active particles include a core and a carbon layer coating the core, and the core includes at least one of a lithium transition metal phosphate and a lithium transition metal oxide.

Part of the cathode active particles are cracked, an average width of cracks of the cracked cathode active particles is in a range of 10 nm to 30 nm, and an average length thereof is in a range of 300 nm to 800 nm.

In the prior art, cathode active materials with high compaction density are generally achieved by compaction treatment, so as to increase the capacity of batteries. Despite the compaction treatment, the compaction density of current cathode active materials is still relatively low, which reduces the conductivity of the material, affects the consistency and uniformity of the cathode active layer, and limits the energy density of batteries. This is because traditional compaction treatment needs to avoid cracking of the cathode active particles as much as possible. On the one hand, cracks on the surface of the particles will affect the coating effect of the carbon layer, resulting in poor conductivity of the material, which is not conducive to improving the discharge specific capacity. On the other hand, the electrolyte will enter the interior of the particles along the cracks, increasing interfacial side reactions and causing the structural stability, thermal stability and cycle stability of the material to decrease at the same time, ultimately leading to the degradation of cycle performance of batteries.

However, the inventor has discovered through research that by causing some of the cathode active particles to crack, cracks having an average width of 10 nm to 30 nm and an average length of 300 nm 800 nm are formed on the surface of the cracked particles, which can expose the electrochemical reaction active sites of the core, facilitate the intercalation and deintercalation of lithium ions during the charging and discharging process, thus the kinetic properties of the material can be improved. While some particles form cracks of appropriate sizes, the cathode active particles show a higher compaction density, which is beneficial to improving the discharge specific capacity of batteries, and the structural stability of the particles remains basically consistent. The improvement in kinetic performance and the increase in active sites are sufficient to compensate for the difference in conductivity caused by the cracking of the carbon layer. Overall, it can effectively avoid the reduction of battery cycle performance. Therefore, the secondary battery provided according to the present invention has good cycle performance while improving the discharge specific capacity, which is beneficial to wide application in the field of energy storage.

In the present invention, the secondary battery includes a cathode plate, an anode plate, an electrolyte, and a separator. During the charging and discharging process of the battery, active ions intercalate and deintercalate between the cathode plate and the anode plate. The electrolyte conducts ions between the cathode plate and the anode plate. The separator is provided between the cathode plate and the anode plate, mainly serves to prevent the cathode plate and anode plate from short-circuiting, while allowing ions to pass through.

The cathode plate will be described in detail below.

In some embodiments, the cathode plate includes a cathode current collector and a cathode active layer arranged on at least one surface of the cathode current collector. It can be understood that the cathode current collector has two opposite surfaces in a thickness direction, and the cathode active layer is arranged on one or both of the two opposite surfaces of the cathode current collector.

In some embodiments, the cathode current collector includes a metal current collector or a composite current collector. For example, the metal current collector may be an aluminum foil. The composite current collector includes a polymer layer and a metal layer arranged on at least one surface of the polymer layer. For example, a material of the polymer layer can be selected from at least one of polypropylene (PP), polyethylene terephthalate (PET), polybutylene terephthalate (PBT), polystyrene (PS), and polyethylene (PE); and a material of the metal layer can be selected from at least one of aluminum, nickel, titanium, silver, and alloys of the aforementioned metals.

In some embodiments, the cathode active layer includes the cathode active particles. The cathode active particles include a core and a carbon layer coating the core, and the core includes at least one of a lithium transition metal phosphate and a lithium transition metal oxide. The lithium transition metal phosphate includes at least one of lithium iron phosphate (LiFePO₄, LFP), lithium manganese phosphate (LiMnPO₄, LMP), and lithium iron manganese phosphate (LFMP). The lithium transition metal oxide includes at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, and lithium nickel cobalt aluminum oxide. For example, lithium cobalt oxide is selected from LiCoO₂; lithium nickel oxide is selected from LiNiO₂; lithium manganese oxide is selected from LiMnO₂, LiMn₂O₄, etc.; lithium nickel cobalt oxide is selected from LiNi_{1/3}Co_{1/3}Mn_{1/3}O₂ (NCM₃₃₃), LiNi_{0.5}Co_{0.2}Mn_{0.3}O₂ (NCM₅₂₃), LiNi_{0.5}Co_{0.25}Mn_{0.25}O₂ (NCM₂₁₁), LiNi_{0.6}Co_{0.2}Mn_{0.2}O₂ (NCM₆₂₂), LiNi_{0.8}Co_{0.1}Mn_{0.1}O₂ (NCM₈₁₁), etc.; and lithium nickel cobalt aluminum oxide is selected from LiNi_{0.8}Co_{0.15}Al_{0.05}O₂. Further, the core includes at least one of lithium iron phosphate (LFP) and lithium nickel cobalt oxide (i.e., ternary cathode material). Furthermore, the core is lithium iron phosphate (LFP).

In the present invention, the carbon layer may completely cover all surfaces of the core to form a continuous film structure, or may partially cover at least a part of the surface of the core to form a dispersed island structure. Further, the carbon layer completely covers all surfaces of the core to form a continuous film structure, thereby improving the conductivity of the cathode active particles.

In some embodiments, in the cathode active particles, a thickness of the carbon layer is in a range of 2 nm to 10 nm, including but not limited to 2 nm, 3 nm, 4 nm, 5 nm, 6 nm, 7 nm, 8 nm, 9 nm, or 10 nm.

In materials of the core of the cathode active particles, LFP is widely used in energy storage systems and power batteries due to its high safety, long cycle life, relatively low cost, and good thermal stability. However, the compaction density of the current LFP cathode material is relatively low, which limits the improvement of its energy density and affects the consistency and uniformity of the cathode active layer. In addition, in order to improve the conductivity, the surface of LFP cathode material is usually coated with a carbon layer, which makes the intercalation and deintercalation of lithium ions relatively hindered, and is not conducive to the improvement of cycle performance.

In respect to the above problems, in the present invention, by causing the surface of some cathode active particles to crack and form cracks of appropriate size, the compaction density, specific surface area, and pore volume of the cathode active particles can be improved, thereby increasing the discharge specific capacity and improving the kinetic properties of the material, so as to compensate for the negative effects of particle cracking, effectively avoid the reduction of cycle performance, thus the secondary battery can achieve both high capacity and long cycle performance.

It can be understood that the method of simultaneously improving capacity and cycle performance by causing part of particles to be cracked is not only applicable to lithium iron phosphate (LFP), but also is applicable to lithium transition metal phosphates, such as lithium manganese phosphate (LMP) and lithium iron manganese phosphate (LFMP) and lithium transition metal oxides such as ternary cathode materials. The material of the core of the cathode active particles is not particularly limited in the present invention.

In some embodiments, the cracked particles have cracks on their surface. An average width of the cracks is in a range of 10 nm to 30 nm, for example 10 nm, 12 nm, 15 nm, 18 nm, 20 nm, 22 nm, 25 nm, 28 nm, or 30 nm. It should be understood that, there may be 10% of cracks whose width exceed the range above. An average length thereof is in a range of 250 nm to 800 nm, for example 300 nm, 350 nm, 400 nm, 450 nm, 500 nm, 550 nm, 600 nm, 650 nm, 700 nm, 750 nm, or 800 nm. It should be understood that, there may be 10% of cracks whose length exceed the range above. Further, the average width of the cracks is in a range of 10 nm to 20 nm, and the average length thereof is in a range of 280 nm to 500 nm.

It can be understood that the width and the length of the cracks can be characterized by a scanning electron microscope (SEM). A depth of the cracks can be characterized by a transmission electron microscope (TEM), and the depth ranges from a few nanometers to a few hundred nanometers, which is not particularly limited in the present invention. In the cracked cathode active particles, the cracks start from the carbon layer on the surface of the particles and gradually extend inward. Some cracks may extend to the core, causing the surface layer of the core adjacent to the carbon layer to crack as well, which exposes more electrochemically active sites, improves the migration and transmission rate of lithium ions, thereby improving the kinetic properties of the material. However, the present invention is not limited hereto, and some cracks may not extend to the core, that is, only the carbon layer cracks and exposes the electrochemically active sites on the surface of the core, which is also beneficial to improving the kinetic properties of the material.

In some embodiments, the number of cracked particles in the cathode active particles accounts for 2.5% to 8%, for example 2.5%, 3%, 3.5%, 4%, 4.5%, 5%, 5.5%, 6%, 6.5%, 7%, 7.5%, or 8%. Further, the number of cracked particles in the cathode active particles accounts for 3% to 4%.

Accordingly, 2.5% to 8% of the cathode active particles are cracked, and the cracks formed can expose more active sites, while increasing the specific surface area and pore volume of the particles, making it easier for lithium ions to intercalate and deintercalate, and the kinetic properties is thus significantly improved. In addition, the cracking of a few particles has basically no effect on the overall structural stability of the cathode active particles, and the improvement in kinetic properties and the increase in active sites are sufficient to compensate for the difference in conductivity caused by the cracking of the carbon layer, thus will not have a negative impact on the cycle performance.

In some embodiments, a compaction density of the cathode active particles is in a range of 2.4 g/cm³ to 2.8 g/cm³, for example 2.4 g/cm³, 2.45 g/cm³, 2.5 g/cm³, 2.55 g/cm³, 2.6 g/cm³, 2.65 g/cm³, 2.7 g/cm³, 2.75 g/cm³, or 2.8 g/cm³, and further optionally 2.5 g/cm³ to 2.7 g/cm³.

The high compaction density of the cathode active particles can enhance the conductivity of the cathode active particles and improve the consistency and uniformity of the cathode active layer, which is of great significance for the preparation of secondary batteries with high capacity and energy density.

In some embodiments, a D10 particle size of the cathode active particles is in a range of 0.3 µm to 0.6 µm, a D50 particle size thereof is in a range of 0.6 µm to 1.2 µm, and a D90 particle size thereof is in a range of 2 µm to 4 µm. For example, the D10 particle size of the cathode active particles can be 0.3 µm, 0.4 µm, 0.5 µm, or 0.6 µm, the D50 particle size can be 0.6 µm, 0.7 µm, 0.8 µm, 0.9 µm, 1 µm, 1.1 µm, or 1.2 µm, and the D90 particle size can be 2 µm, 2.2 µm, 2.5 µm, 2.8 µm, 3 µm, 3.2 µm, 3.5 µm, 3.8 µm, or 4 µm. Further, the D10 particle size of the cathode active particles is in a range of 0.35 µm to 0.45 µm, the D50 particle size thereof is in a range of 0.7 µm to 0.9 µm, and the D90 particle size thereof is in a range of 2.2 µm to 2.5 µm.

The particle size of the cathode active particles is distributed in a narrow range, and the particle size has good uniformity, which is beneficial to improving capacity and extending cycle life. If the particle sizes of the cathode active particles vary greatly, the following phenomena will occur: during the charging process, incomplete delithiation occurs in large-sized or large-volume particles, resulting in low capacity; during the discharging process, the small-sized or small-volume particles are prone to over-discharge and damage.

In some embodiments, a span of the cathode active particles is in a range of 2.2 to 3.2, for example 2.2, 2.3, 2.4, 2.5, 2.6, 2.7, 2.8, 2.9, 3, 3.1, 3.2, and further optionally 2.3 to 2.6.

In some embodiments, a specific surface area of the cathode active particles is ≥10.63 m²/g, for example 10.63 m²/g, 10.65 m²/g, 10.68 m²/g, 10.7 m²/g, 10.72 m²/g, 10.75 m²/g, 10.78 m²/g, or 10.8 m²/g, and further optionally in a range of 10.63 m²/g to 10.78 m²/g.

In some embodiments, a pore volume of the cathode active particles is ≥0.0052 cm³/g, for example 0.0052 cm³/g, 0.0053 cm³/g, 0.0054 cm³/g, 0.0055 cm³/g, 0.0056 cm³/g, 0.0057 cm³/g, 0.0058 cm³/g, or 0.0060 cm³/g, and further optionally in a range of 0.0052 cm³/g to 0.0058 cm³/g.

Due to the cracking of some particles, the overall specific surface area and pore volume of the cathode active particles are improved, which is beneficial to accelerating the migration and transmission rate of lithium ions, thereby improving the kinetic properties of the material.

In some embodiments, the cathode active layer further includes at least one of a cathode conductive agent and a cathode binder. The cathode conductive agent includes at least one of conductive carbon black, conductive graphite, acetylene black, Ketjen black, carbon quantum dots, carbon nanotubes, graphene, and carbon nanofibers. The cathode binder includes at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the method for preparing the cathode plate includes the following steps: dispersing cathode active particles, a cathode binder and a cathode conductive agent in a solvent to obtain a cathode slurry; coating the cathode slurry on at least one surface of the cathode current collector, and subject to drying, cold pressing and other processes to obtain the cathode plate. The solvent of the cathode slurry may be N-methylpyrrolidone (NMP).

The anode plate will be described in detail below.

In some embodiments, the anode plate includes an anode current collector and an anode active layer arranged on at least one surface of the anode current collector. It can be understood that the anode current collector has two opposite surfaces in a thickness direction, and the anode active layer is arranged on one or both of the two opposite surfaces of the anode current collector.

In some embodiments, the anode current collector includes a metal current collector or a composite current collector. For example, the metal current collector may be a copper foil. The composite current collector includes a polymer layer and a metal layer arranged on at least one surface of the polymer layer. For example, a material of the polymer layer can be selected from at least one of polypropylene (PP), polyethylene terephthalate (PET), polybutylene terephthalate (PBT), polystyrene (PS), and polyethylene (PE); and a material of the metal layer can be selected from at least one of copper, nickel, titanium, silver, and alloys of the aforementioned metals.

In some embodiments, the anode active layer includes at least anode active particles, and the anode active particles include at least one of a carbon material, a silicon-based material, a tin-based material, and lithium titanate. The carbon material includes at least one of natural graphite, artificial graphite, soft carbon, and hard carbon. The silicon-based material includes at least one of elemental silicon, silicon-oxygen compounds, silicon-carbon composites, silicon-nitrogen composites, and silicon alloys. The tin-based material includes at least one of elemental tin, tin oxide compounds and tin alloys.

In some embodiments, the anode active layer further includes at least one of an anode conductive agent, an anode binder, and a functional additive. The anode conductive agent includes at least one of conductive carbon black, conductive graphite, acetylene black, Ketjen black, carbon quantum dots, carbon nanotubes, graphene, and carbon nanofibers. The anode binder includes at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). The functional additive may be a thickener such as sodium carboxymethyl cellulose (CMC-Na).

In some embodiments, the method for preparing the anode plate includes the following steps: dispersing anode active particles, an anode conductive agent, an anode binder, and a functional additive in a solvent to obtain an anode slurry; coating the anode slurry on at least one surface of the anode current collector, and subject to drying, cold pressing and other processes to obtain the anode plate. The solvent of the anode slurry may be deionized water.

The electrolyte, the separator and an outer package of the secondary battery are described in detail below.

In some embodiments, the electrolyte may be liquid, gel, or all solid. Further, the electrolyte is an electrolyte solution, which includes an electrolyte salt and a solvent.

In some embodiments, the electrolyte salt includes at least one of lithium hexafluorophosphate, lithium tetrafluoroborate, lithium perchlorate, lithium hexafluoroarsenate, lithium bisfluorosulfonyl imide, lithium bistrifluoromethanesulfonyl imide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some embodiments, the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further includes an additive, such as at least one of fluoroethylene carbonate (FEC), difluoroethylene carbonate (DFEC), trifluoroproplylene carbonate (TFPC), and the like.

In some embodiments, a material of the separator includes at least one of glass fiber, non-woven fabric, polyethylene, polypropylene, and polyvinylidene difluoride. The separator may be a single-layer film or a multi-layer composite film. When the separator is a multi-layer composite film, the materials of each layer may be the same or different.

In some embodiments, the cathode plate, the anode plate, and the separator are formed into an electrode assembly through a winding process or a lamination process.

In some embodiments, the secondary battery includes an outer package for encapsulating the aforementioned electrode assembly and the electrolyte. The outer package of the secondary battery includes at least one of a hard case and a soft pack. The hard case can be a hard plastic case, an aluminum case, a steel case, etc., and the soft pack can be a pouch-type soft pack or a plastic soft pack.

In a second aspect of the present invention, a method for preparing the aforementioned secondary battery is provided.

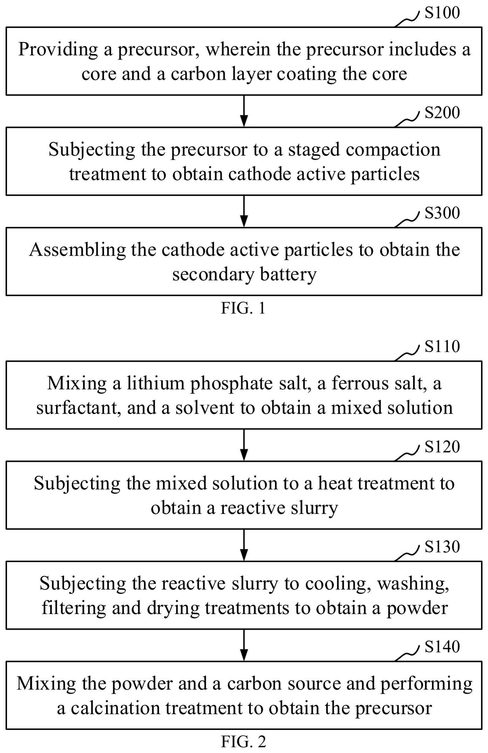

In some embodiments, as shown in FIG. 1, the method for preparing the secondary battery includes the following steps:
S 100, a precursor is provided. The precursor includes a core and a carbon layer coating the core, and the core includes at least one of a lithium transition metal phosphate and a lithium transition metal oxide.
S200, the precursor is subjected to a staged compaction treatment to obtain cathode active particles.
S300, the cathode active particles are assembled to obtain the secondary battery.

Part of the cathode active particles are cracked, an average width of cracks of the cracked cathode active particles is in a range of 10 nm to 30 nm, and an average length thereof is in a range of 300 nm to 800 nm.

In the present invention, by performing a staged compaction treatment on the precursor coated with the carbon layer, part of the cathode active particles crack. Cracks having an average width of 10 nm to 30 nm and an average length of 300 nm 800 nm are formed on the surface of the cracked particles, which can expose the electrochemical reaction active sites of the core, facilitate the intercalation and deintercalation of lithium ions during the charging and discharging process, thus the kinetic properties of the material can be improved. While part of particles form cracks with appropriate sizes, the cathode active particles show a higher compaction density, which is beneficial to improving the discharge specific capacity of batteries, and the structural stability of the particles remains basically consistent. The improvement in kinetic performance and the increase in active sites are sufficient to compensate for the difference in conductivity caused by the cracking of the carbon layer. Overall, it can effectively avoid the reduction of battery cycle performance. Therefore, the secondary battery prepared according to the present invention achieves both high capacity and long-cycle performance, which is beneficial to wide application in the field of energy storage.

The method for preparing the secondary battery will be described in detail below.

S100, a precursor is provided. The precursor includes a core and a carbon layer coating the core, and the core includes at least one of a lithium transition metal phosphate and a lithium transition metal oxide.

It can be understood that the precursor in step S100 can be cathode active particles with no cracks at all, or cathode active particles with very few cracks and small crack size. Therefore, it is necessary to perform a staged compaction treatment to make the crack size of the cracked particles satisfy the aforementioned requirements. In the precursor, the lithium transition metal phosphate and lithium transition metal oxide of the core and the carbon layer are as described above, and will not be elaborated herein.

In some embodiments, the core of the precursor includes a lithium iron phosphate (LFP) material. As shown in FIG. 2, the method for preparing the precursor includes the following steps:
S110, a lithium phosphate, a ferrous salt, a surfactant, and a solvent are mixed to obtain a mixed solution.
S120, the mixed solution is subjected to a heat treatment to obtain a reactive slurry.
S130, the reactive slurry is subjected to cooling, washing, filtering and drying treatments to obtain a powder.
S140, the powder and a carbon source are mixed and a calcination treatment is performed to obtain the precursor.

In some embodiments, the lithium phosphate includes at least one of lithium phosphate (Li₃PO₄), dilithium hydrogen phosphate (Li₂HPO₄) and lithium dihydrogen phosphate (LiH₂PO₄), and further optionally lithium phosphate (Li₃PO₄).

Compared with preparing LFP materials using three raw materials: lithium salt, phosphate and ferrous salt in the prior art, the precursor prepared using two raw materials: lithium phosphate and ferrous salt has higher purity and crystallinity, and the particles are more uniform in size and more regular in morphology. In this way, during the staged compaction, the force acting on the precursor is more uniform, thereby causing some particles to crack and form the cathode active particles designed in the present invention.

In some embodiments, the ferrous salt includes at least one of ferrous sulfate (FeSO₄), ferrous chloride (FeCl₂), ferrous acetate (Fe(CH₃COO)₂), and ferrous oxalate (FeC₂O₄), and further optionally ferrous sulfate (FeSO₄). The raw material of the ferrous salt may not contain crystal water, or may contain crystal water, such as FeSO₄·7H₂O, FeCl₂·4H₂O, or FeC₂O₄·2H₂O.

In some embodiments, a molar ratio of lithium in the lithium phosphate to iron in the ferrous salt is in a range of (3-3.6):2, including but not limited to 3:2, 3.1:2, 3.2:2, 3.3:2, 3.4:2, 3.5:2, or 3.6:2.

In some embodiments, the surfactant includes at least one of alkylbenzene sulfonate, alkyl sulfonates, α-olefin sulfonate, alkylnaphthalene sulfonate, lignin sulfonate, succinate sulfonate, fatty alcohol sulfate, and fatty alcohol polyoxyethylene ether sulfate. For example, suitable surfactants include, but are not limited to, sodium dodecyl benzene sulfonate (LAS), sodium dodecyl sulfonate (i.e., sodium lauryl sulfonate), sodium dibutyl naphthalene sulfonate, sodium lignin sulfonate, ammonium lignin sulfonate, dioctyl sodium sulfosuccinate, sodium dodecyl sulfate (SDS), and sodium laureth sulfate (SLES), and the like. Furthermore, the surfactant is optionally sodium dodecyl benzene sulfonate (LAS).

Sodium dodecylbenzene sulfonate (LAS) and other anionic surfactants can be ionized in the mixed solution. The organic chain part with surface activity exhibits a hydrophobic anionic effect, which can promote uniform dispersion of raw materials, avoid excessive local concentration of raw materials, and adjust the size, morphology and crystal form of the product, thereby forming a precursor with high purity, good crystallinity, uniform size, and regular morphology.

In some embodiments, a mass fraction of the surfactant in the mixed solution is in a range of 1% to 2%, for example 1%, 1.2%, 1.4%, 1.6%, 1.8%, or 2%.

In some embodiments, in step S110, the solvent includes water, such as deionized water, pure water, ultrapure water, and the like. In other embodiments, the solvent may be a mixture of water and an organic solvent, such as water and ethanol.

In some embodiments, the step S110 of mixing the lithium phosphate, the ferrous salt, the surfactant, and the solvent includes the following steps: weighing appropriate amounts of the lithium phosphate and the ferrous salt, dispersing in the solvent, respectively, and stirring for 10 min to 30 min to obtain a lithium phosphate solution and a ferrous salt solution; mixing the two solutions, adding the surfactant, and ultrasonically dispersing for 30 min to 60 min to obtain the mixed solution.

In some embodiments, in step S120, the heat treatment includes: heating the mixed solution in a water bath at 120°C to 180°C for 12 h to 18 h. For, the temperature of the heat treatment may be 120°C, 130°C, 140°C, 150°C, 160°C, 170°C, or 180°C, and the time of the heat treatment may be 12 h, 13 h, 14 h, 15 h, 16 h, 17 h, or 18 h.

In some embodiments, the step S130 of subjecting the reactive slurry to cooling, washing, filtering and drying treatments to obtain the powder includes the following steps: cooling the reactive slurry to room temperature, washing with anhydrous ethanol and deionized water alternately for 1 to 5 times, performing vacuum filtration after each washing, and drying the resulting filter cake.

In some embodiments, in step S130, the drying treatment includes: vacuum drying the reactive slurry at 50°C to 100°C for 10 h to 24 h. For example, the temperature of the drying treatment may be 50°C, 55°C, 60°C, 65°C, 70°C, 75°C, 80°C, 85°C, 90°C, 95°C, or 100°C, and time of the drying treatment may be 10 h, 12 h, 14 h, 16 h, 18 h, 20 h, 22 h, or 24 h.

In some embodiments, the carbon source includes at least one of glucose, sucrose, fructose, ascorbic acid, polyethylene glycol (PEG), and polyvinyl alcohol (PVA). Polyethylene glycol can have a molecular weight of 200 to 10000, including but not limited to PEG-200, PEG-400, PEG-600, PEG-1000, PEG-2000, PEG-4000, PEG-6000, PEG-8000, or PEG-10000.

In some embodiments, a molar ratio of the powder to the carbon source is in a range of 1:(1.5-2.5), including but not limited to 1:1.5, 1:1.6, 1:1.7, 1:1.8, 1:1.9, 1:2, 1:2.1, 1:2.2, 1:2.3, 1:2.4, or 1:2.5, and further optionally 1:(1.8-2.2).

In some embodiments, in step S140, the calcination treatment includes: calcining the powder and the carbon source at 500°C to 900°C for 8 h to 12 h in a protective atmosphere. For example, the protective atmosphere includes at least one of nitrogen, helium, neon, argon, krypton and, xenon, the temperature of the calcination treatment may be 500°C, 550°C, 600°C, 650°C, 700°C, 750°C, 800°C, 850°C, or 900°C, and the time of the calcination treatment may be 8 h, 8.5 h, 9 h, 9.5 h, 10 h, 10.5 h, 11 h, 11.5 h, or 12 h.

In some embodiments, in step S140, after the calcination treatment, a crushing treatment step is further included, and the precursor after the crushing treatment satisfies the following conditions: the D10 particle size is in a range of 0.3 µm to 0.6µm, the D50 particle size is in a range of 0.6 µm to 1.2 µm, the D90 particle size is in a range of 2 µm to 4 µm, and the span is in a range of 2.2 to 3.2.

S200, the precursor is subjected to a staged compaction treatment to obtain cathode active particles.

In some embodiments, the staged compaction treatment is performed at a pressure of 360 MPa to 372 MPa for a total time of 300 s to 750 s. For example, the pressure of the staged compaction treatment may be 360 MPa, 361 MPa, 362 MPa, 363 MPa, 364 MPa, 365 MPa, 366 MPa, 367 MPa, 368 MPa, 369 MPa, 370 MPa, 371 MPa, or 372 MPa, and the total time of the staged compaction treatment may be 300 s, 350 s, 400 s, 450 s, 500 s, 550 s, 600 s, 650 s, 700 s, or 750 s.

In some embodiments, the staged compaction treatment includes at least three stages of compaction treatment, and a pressure of a subsequent stage of compaction treatment is no less than a pressure of a previous stage of compaction treatment. In addition, the time of each compaction treatment may be the same or different, and is not particularly limited in the present invention.

Through one compaction treatment, for example, compacted at 372 MPa for 750 s, it is usually only possible to compress the fluffy granular material into a compact and orderly lamellar material. The resulting material will have basically no particle cracking, and it is difficult to achieve an ideal cracking effect. In contrast, by using at least three stages of compaction treatment and gradually increasing the pressure, it is possible to obtain a lamellar material with some of the particles more likely to crack under the action of a gradually increasing external force, and the number of cracked particles and the size of the cracks are more appropriate.

In some embodiments, the staged compaction treatment includes a five-stage compaction treatment, including the following steps:
maintaining a pressure of 360 MPa to 362 MPa for 100 s to 150 s;
maintaining a pressure of 362 MPa to 364 MPa for 100 s to 150 s;
maintaining a pressure of 364 MPa to 366 MPa for 100 s to 150 s;
maintaining a pressure of 366 MPa to 368 MPa for 100 s to 150 s; and
maintaining a pressure of 368 MPa to 372 MPa for 100 s to 150 s.

S300, the cathode active particles are assembled to obtain the secondary battery.

In some embodiments, the step S300 of assembling the cathode active particles to obtain the secondary battery includes the following steps: preparing the cathode active particles into a cathode plate; forming the cathode plate, a anode plate, and a separators into an electrode assembly by a winding process or a stacking process; loading the electrode assembly into an outer package, drying to remove water, then injecting electrolyte, sealing, and subjecting to standing, hot and cold pressings, formation, clamping, capacity division and other processes to obtain the secondary battery.

In a third aspect of the present invention, a battery pack is provided, including a battery box and a plurality of secondary batteries arranged in the battery box. The plurality of secondary batteries include the secondary battery as described above, or a secondary battery prepared by the method as described above. The battery pack achieves both high capacity and long-cycle performance.

In a fourth aspect of the present invention, an energy storage system is provided, including the battery pack as described above. The energy storage system achieves both high capacity and long-cycle performance.

In the present invention, the energy storage system may be a cabinet-type energy storage system, commonly known as an energy storage cabinet. The energy storage cabinet includes a cabinet body and a plurality of battery packs arranged in the cabinet body.

In a fifth aspect of the present invention, an electric apparatus is provided, including the energy storage system as described above.

In the present invention, the energy storage system can be used as a power source or energy storage unit for the electric apparatus. The electric apparatus includes mobile devices, electric vehicles, electric trains, ships and satellites, energy storage systems, etc. Mobile devices may be mobile phones, tablet computers, laptop computers, etc.; electric vehicles may be pure electric vehicles, hybrid electric vehicles, plug-in hybrid electric vehicles, electric bicycles, electric scooters, electric golf carts, electric trucks, etc.

The present invention will be further described below with reference to specific examples and comparative examples. The raw materials and instruments involved in the following examples and comparative examples are commercially available, and the processes involved are common choices of those skilled in the art, unless otherwise specified.

### Example 1

The method for preparing the secondary battery in this example is as follows.

### (1) Preparation of precursor:

Lithium phosphate and ferrous sulfate were weighed in a molar ratio of lithium to iron of 3:2, dispersed in deionized water respectively, and stirred for 20 min to obtain lithium phosphate solution and ferrous sulfate solution; the two solutions were mixed, and 1.5% by mass fraction of surfactant sodium dodecyl benzene sulfonate LAS was added, and ultrasonically dispersed for 40 min to obtain a mixed solution.

The mixed solution was heated in a water bath at 150°C for 15 h to obtain a reactive slurry; the reactive slurry was cooled to room temperature, and washed with anhydrous ethanol and deionized water alternately for 3 times during vacuum filtration, and the resulting filter cake was vacuum dried at 80°C for 16 h to obtain a powder.

The powder and glucose were uniformly mixed in a molar ratio of 1:2, and calcined at 700°C for 10 h in a tube furnace under nitrogen protection to obtain a precursor.

(2) Preparation of cathode active particles: the precursor was loaded in a compaction density meter for staged compaction:
the first stage: a pressure of 362 MPa was maintained for 150 s;
the second stage: a pressure of 364 MPa was maintained for 150 s;
the third stage: a pressure of 366 MPa was maintained for 150 s;
the fourth stage: a pressure of 368 MPa was maintained for 150 s; and
the fifth stage: a pressure of 372 MPa was maintained for 150 s.

(3) Preparation of cathode plate: the aforementioned cathode active particles, conductive carbon black SP, and binder PVDF were dispersed in NMP at a weight ratio of 98:1:1 and mixed evenly to obtain a cathode slurry; the cathode slurry was evenly coated on both surfaces of an aluminum foil, dried and cold pressed to obtain the cathode plate.

(4) Preparation of anode plate: the anode active particles, graphite, thickener sodium carboxymethyl cellulose CMC, binder styrene butadiene rubber SBR, and conductive agent acetylene black were mixed in a mass ratio of 97:1:1:1, deionized water was added, and an anode slurry was obtained under the action of a vacuum mixer; the anode slurry was evenly coated on both surfaces of a copper foil, dried and cold pressed to obtain the anode plate.

(5) Separator: a polypropylene separator with 12µm thickness was selected.

(6) Preparation of electrolyte: ethylene carbonate (EC) and diethyl carbonate (DEC) in a volume ratio of 1:1 were selected as organic solvents, LiPF₆ was dissolved and mixed evenly in the organic solvents to obtain an electrolyte with a LiPF₆ concentration of 1 mol/L.

(7) Preparation of secondary battery: the cathode plate, the separator, and anode plate were stacked in sequence, and then wound into a square bare cell, then enclosed in an aluminum plastic film; after drying to remove water, the electrolyte was injected, then sealed, and subjected to standing, hot and cold pressings, formation, clamping, and capacity division to obtain a secondary battery.

### Example 2

The method for preparing the secondary battery of Example 2 was basically the same as the method for preparing the secondary battery of Example 1, except that the pressure and maintaining time of the staged compaction were different, as follows:
the first stage: a pressure of 360 MPa was maintained for 100 s;
the second stage: a pressure of 362 MPa was maintained for 100 s;
the third stage: a pressure of 364 MPa was maintained for 100 s;
the fourth stage: a pressure of 366 MPa was maintained for 100 s; and
the fifth stage: a pressure of 370 MPa was maintained for 100 s.

### Example 3

The method for preparing the secondary battery of Example 3 was basically the same as the method for preparing the secondary battery of Example 1, except that the staged compaction was a four-stage compaction, as follows:
the first stage: a pressure of 362 MPa was maintained for 150 s;
the second stage: a pressure of 365 MPa was maintained for 150 s;
the third stage: a pressure of 368 MPa was maintained for 150 s; and
the fourth stage: a pressure of 372 MPa was maintained for 150 s.

### Example 4

The method for preparing the secondary battery of Example 4 was basically the same as the method for preparing the secondary battery of Example 1, except that the staged compaction was a three-stage compaction, as follows:
the first stage: a pressure of 362 MPa was maintained for 150 s;
the second stage: a pressure of 367 MPa was maintained for 150 s; and
the third stage: a pressure of 372 MPa was maintained for 150 s.

### Example 5

The method for preparing the secondary battery of Example 5 was basically the same as the method for preparing the secondary battery of Example 1, except that the preparation conditions of the precursor were different, as follows:
Lithium phosphate and ferrous sulfate were weighed in a molar ratio of lithium to iron of 3.6:2, dispersed in deionized water respectively, and stirred for 30 min to obtain lithium phosphate solution and ferrous sulfate solution; the two solutions were mixed, and 1% by mass fraction of surfactant sodium dodecyl benzene sulfonate LAS was added, ultrasonically dispersed for 60 min, and a mixed solution was obtained.

The mixed solution was heated in a water bath at 180°C for 18 h to obtain a reactive slurry; the reactive slurry was cooled to room temperature, and washed with anhydrous ethanol and deionized water alternately for 3 times during vacuum filtration, and the resulting filter cake was vacuum dried at 100°C for 12 h to obtain a powder.

The powder and glucose were uniformly mixed in a molar ratio of 1:2, and calcined at 900°C for 12 h in a tube furnace under nitrogen protection to obtain a precursor.

### Example 6

The method for preparing the secondary battery of Example 6 was basically the same as the method for preparing the secondary battery of Example 1, except that the raw materials for preparing the precursor were different, as follows:
Lithium carbonate, ammonium phosphate, and ferrous sulfate were weighed in a molar ratio of lithium, phosphorus, and iron of 3:1:2, dispersed in deionized water respectively, and stirred for 30 min to obtain lithium phosphate solution and ferrous sulfate solution; the two solutions were mixed, and 1.5% by mass fraction of a surfactant was added, ultrasonically dispersed for 60 min, and a mixed solution was obtained.

The mixed solution was heated in a water bath at 150°C for 15 h to obtain a reactive slurry; the reactive slurry was cooled to room temperature, and washed with anhydrous ethanol and deionized water alternately for 3 times during vacuum filtration, and the resulting filter cake was vacuum dried at 80°C for 16 h to obtain a powder.

The powder and glucose were uniformly mixed in a molar ratio of 1:2, and calcined at 700°C for 10 h in a tube furnace under nitrogen protection to obtain a precursor.

### Example 7

The method for preparing the secondary battery of Example 7 was basically the same as the method for preparing the secondary battery of Example 1, except that the raw materials for preparing the precursor were different, as follows:
Lithium phosphate and ferrous sulfate were weighed in a molar ratio of lithium to iron of 3:2, dispersed in deionized water respectively, and stirred for 20 min to obtain lithium phosphate solution and ferrous sulfate solution; the two solutions were mixed and ultrasonically dispersed for 40 min, and a mixed solution was obtained.

The mixed solution was heated in a water bath at 150°C for 15 h to obtain a reactive slurry; the reactive slurry was cooled to room temperature, and washed with anhydrous ethanol and deionized water alternately for 3 times during vacuum filtration, and the resulting filter cake was vacuum dried at 80°C for 16 h to obtain a powder.

The powder and glucose were uniformly mixed in a molar ratio of 1:2, and calcined at 700°C for 10 h in a tube furnace under nitrogen protection to obtain a precursor.

### Example 8

The method for preparing the secondary battery of Example 8 was basically the same as the method for preparing the secondary battery of Example 1, except that the precursor was the ternary material NCM₈₁₁, specifically NCM 811 series S85E from Ningbo Rongbai New Energy Technology Co., Ltd.

### Comparative Example 1

The method for preparing the secondary battery of Comparative Example 1 was basically the same as the method for preparing the secondary battery of Example 1, except that the precursor of Comparative Example 1 was not subjected to a staged compaction treatment, but was directly used as cathode active particles and used to prepare the cathode plate.

### Comparative Example 2

The method for preparing the secondary battery of Comparative Example 2 was basically the same as the method for preparing the secondary battery of Example 1, except that the precursor was subjected to one compaction treatment, that is, a pressure of 372 MPa was maintained for 750 s.

### Performance Test

### 1. Test items:

(1) Morphological characterization: the microscopic morphology of the cathode active particles was characterized by SEM; the D10 particle size, D50 particle size, and D90 particle size were determined by a particle size analysis software, and the span was calculated according to (D90-D10) ÷ D50; the number and percentage of cracked particles in the cathode active particles were calculated, and the length and width of the cracks were observed.
(2) Phase characterization: the phase of the cathode active particles was characterized by X-ray diffraction analysis (XRD).
(3) Specific surface area: measured by gas adsorption BET method.
(4) Pore volume: measured by carbon tetrachloride method.
(5) Compaction density: measured using a compaction density meter.
(6) Electrical performance: the discharge specific capacity of the secondary battery was measured at rates of 0.1C, 0.5C, and 1C, , the number of cycles until capacity reduced to 80% and the number of cycles until energy efficiency reduced to 80% were tested at a rate of 0.3C, the test temperature was 25°C and the voltage range ranged from 2.0 V to 3.75 V.

### 2. Test result analysis:

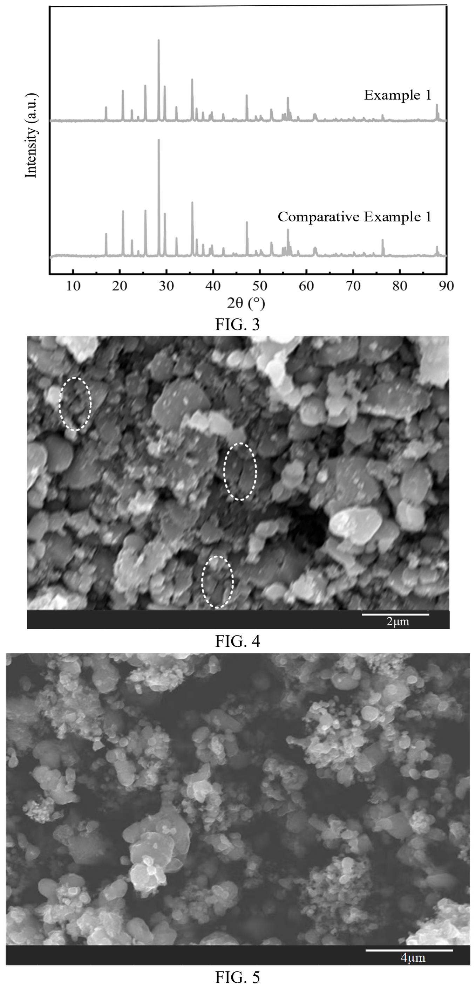

The results measured according to the aforementioned test method are shown in Tables 1 to 3 and FIGS. 3 to 5, respectively.

**Table 1. Particle size of cathode active particles**

| Group | D10 particle size (µm) | D50 particle size (µm) | D90 particle size (µm) | Span |
|---|---|---|---|---|
| Example 1 | 0.367 | 0.783 | 2.295 | 2.46 |
| Example 2 | 0.402 | 0.792 | 2.418 | 2.55 |
| Example 3 | 0.413 | 0.889 | 2.48 | 2.33 |
| Example 4 | 0.426 | 0.893 | 2.497 | 2.32 |
| Example 5 | 0.372 | 0.802 | 2.398 | 2.53 |
| Example 6 | 0.57 | 1.02 | 3.692 | 3.06 |
| Example 7 | 0.51 | 0.93 | 2.69 | 2.34 |
| Example 8 | 1.21 | 1.95 | 6.877 | 2.91 |
| Comparative Example 1 | 0.859 | 1.359 | 4.937 | 3.00 |
| Comparative Example 2 | 0.69 | 1.38 | 3.983 | 2.39 |

**Table 2. Parameters of cathode active particles**

| Group | Specific surface area (m²/g) | Pore volume (cm³/g) | Compaction density (g/cm³) | Proportion of cracked particles (%) | Length of cracks (nm) | Width of cracks (nm) |
|---|---|---|---|---|---|---|
| Example 1 | 10.7728 | 0.058 | 2.68 | 4 | 500 | 20 |
| Example 2 | 10.754 | 0.056 | 2.62 | 3.8 | 480 | 18 |
| Example 3 | 10.746 | 0.054 | 2.55 | 3.2 | 420 | 15 |
| Example 4 | 10.688 | 0.053 | 2.54 | 3 | 320 | 13 |
| Example 5 | 10.7574 | 0.057 | 2.65 | 3.8 | 485 | 11 |
| Example 6 | 10.632 | 0.052 | 2.52 | 3 | 280 | 10 |
| Example 7 | 10.642 | 0.052 | 2,53 | 2.8 | 300 | 12 |
| Example 8 | 8.68 | 0.032 | 2.78 | 7 | 600 | 30 |
| Comparative Example 1 | 10.5113 | 0.051 | 2.4 | / | / | / |
| Comparative Example 2 | 10.62 | 0.051 | 2.5 | 1 | 120 | 5 |

**Table 3. Performance of secondary batteries**

| Group | Discharge specific capacity at 0.1C (mAh/g) | Discharge specific capacity at 0.5C (mAh/g) | Discharge specific capacity at 1C (mAh/g) | Number of cycles until 80% capacity at 0.3C | Number of cycles until 80% energy efficiency at 0.3C |
|---|---|---|---|---|---|
| Example 1 | 165 | 155 | 146 | 1200 | 1100 |
| Example 2 | 164 | 154 | 145 | 1150 | 1070 |
| Example 3 | 163 | 152 | 144 | 1140 | 1056 |
| Example 4 | 162 | 150 | 142 | 1100 | 1032 |
| Example 5 | 165 | 154 | 145 | 1183 | 1080 |
| Example 6 | 160 | 149 | 138 | 1090 | 1010 |
| Example 7 | 162 | 149 | 140 | 1080 | 1000 |
| Example 8 | 220 | 208 | 200 | 400 | 440 |
| Comparative Example 1 | 156 | 145 | 134 | 1050 | 1000 |
| Comparative Example 2 | 158 | 146 | 135 | 1060 | 1000 |

It can be seen from Table 1 that the cathode active particles prepared in Examples 1 to 5 have a D10 particle size of 0.367 µm to 0.426 µm, a D50 particle size of 0.783 µm to 0.893 µm, a D90 particle size of 2.295 µm to 2.497 µm, and a span of 2.32 to 2.55, showing the characteristics of small span, narrow particle size distribution, and good particle size uniformity. In addition, it can be seen from FIG. 3 that the cathode active particles prepared in Example 1 have high purity and good crystallinity. The increase in the span or the overall particle size of the cathode active particles prepared in Examples 6 to 7 indicates that, in Examples 1 to 5, through synergistic combination of lithium phosphate and the surfactant, the particle size and morphology of the product can be effectively regulated, thereby obtaining the precursors with uniform particle size, regular morphology, high purity and good crystallinity, which is beneficial to uniform force during staged compaction treatment and obtaining cathode active particles with suitable cracks.

It can be seen from Table 2 that, compared with the Comparative Example 1 without compaction treatment, the specific surface area, pore volume and compaction density of the cathode active particles of Examples 1 to 8 are improved after the staged compaction treatment, which is beneficial to improving the discharge specific capacity and kinetic properties. It can be seen from the SEM observation that some of the cathode active particles of Examples 1 to 8 were cracked, and the cracked particles were circled by the dashed box in FIG. 4. In the cathode active particles of Examples 1 to 8, the number of cracked particles accounts for 2.8% to 7%, and the average width of the cracks is in a range of 10 nm to 30 nm, and the average length is in a range of 280 nm to 600 nm. As shown in FIG. 5, no particle cracking was observed by SEM in the cathode active particles of Comparative Example 1 without compaction treatment. Although it was subjected to one compaction treatment in Comparative Example 2, the number of cracked particles accounts for only 1%, the width and length of the cracks were less, and the specific surface area slightly increases compared with Comparative Example 1, and the pore volume has no significant change, indicating that the staged compaction treatment is the key to causing some particles in the cathode active particles to crack and form cracks of specific sizes.

It can be seen from Table 3 that, compared with Comparative Examples 1-2, after the cathode active particles of Examples 1-7 were assembled into secondary batteries, their discharge specific capacities at rates of 0.1C, 0.5C, and 1C are significantly improved. In addition, when the capacity and energy efficiency of the secondary batteries of Examples 1 to 8 were reduced to 80%, the number of cycles was basically the same as that of Comparative Examples 1 to 2, and even improved, indicating that by using the cathode active particles of Examples 1 to 7, secondary batteries can achieve both high capacity and long-cycle performance.

## Claims

1. A secondary battery, comprising a plurality of cathode active particles, wherein each cathode active particle comprises a core and a carbon layer coating the core, and the core comprises at least one of a lithium transition metal phosphate and a lithium transition metal oxide;
wherein part of the cathode active particles are cracked, an average width of cracks of a cracked cathode active particle is in a range of 10 nm to 30 nm, and an average length thereof is in a range of 300 nm to 800 nm.

2. The secondary battery according to claim 1, wherein 2.5% to 8% of the cathode active particles are cracked.

3. The secondary battery according to claim 1 or 2, wherein the cathode active particles satisfy one or more of the following conditions:
wherein a compaction density of the cathode active particles is in a range of 2.4 g/cm³ to 2.8 g/cm³;
wherein a D10 particle size of the cathode active particles is in a range of 0.3 µm to 0.6 µm, a D50 particle size thereof is in a range of 0.6 µm to 1.2 µm, and a D90 particle size thereof is in a range of 2 µm to 4 µm;
wherein a specific surface area of the cathode active particles is greater than or equal to 10.63 m²/g, and a pore volume of the cathode active particles is greater than or equal to 0.0052 cm³/g.

4. The secondary battery according to any one of preceding claims, wherein a span of the cathode active particles is in a range of 2.2 to 3.2.

5. The secondary battery according to any one of preceding claims, wherein the lithium transition metal phosphate comprises at least one of lithium iron phosphate, lithium manganese phosphate, and lithium iron manganese phosphate;
and/or, wherein the lithium transition metal oxide comprises at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, and lithium nickel cobalt aluminum oxide.

6. A method for preparing a secondary battery, comprising:
providing a precursor, wherein the precursor comprises a core and a carbon layer coating the core, and the core comprises at least one of a lithium transition metal phosphate and a lithium transition metal oxide;
subjecting the precursor to a staged compaction treatment to obtain cathode active particles; and
assembling the cathode active particles to obtain the secondary battery;
wherein part of the cathode active particles are cracked, an average width of cracks of a cracked cathode active particle is in a range of 10 nm to 30 nm, and an average length thereof is in a range of 300 nm to 800 nm.

7. The method according to claim 6, wherein the staged compaction treatment is performed at a pressure of 360 MPa to 372 MPa for a total time of 300 s to 750 s.

8. The method according to claim 7, wherein the staged compaction treatment comprises at least three stages of compaction treatment, and a pressure of a subsequent stage of compaction treatment is no less than a pressure of a previous stage of compaction treatment.

9. The method according to claim 8, wherein the staged compaction treatment comprises a five-stage compaction treatment, comprising:
maintaining a pressure of 360 MPa to 362 MPa for 100 s to 150 s;
maintaining a pressure of 362 MPa to 364 MPa for 100 s to 150 s;
maintaining a pressure of 364 MPa to 366 MPa for 100 s to 150 s;
maintaining a pressure of 366 MPa to 368 MPa for 100 s to 150 s; and
maintaining a pressure of 368 MPa to 372 MPa for 100 s to 150 s.

10. The method according to any one of claims 6 to 9, wherein the core includes a lithium iron phosphate material, and a method for preparing the precursor comprises:
mixing a lithium phosphate, a ferrous salt, a surfactant, and a solvent to obtain a mixed solution;
subjecting the mixed solution to a heat treatment to obtain a reactive slurry;
subjecting the reactive slurry to cooling, washing, filtering and drying treatments to obtain a powder; and
mixing the powder and a carbon source and performing a calcination treatment to obtain the precursor.

11. The method according to claim 10, further satisfying one or more of the following conditions:
wherein the lithium phosphate comprises at least one of lithium phosphate, dilithium hydrogen phosphate, and lithium dihydrogen phosphate;
wherein the ferrous salt comprises at least one of ferrous sulfate, ferrous chloride, ferrous acetate, and ferrous oxalate;
wherein a molar ratio of phosphorus in the lithium phosphate to iron in the ferrous salt is in a range of (1-1.2):2;
wherein the surfactant includes at least one of alkylbenzene sulfonate, alkyl sulfonate, α-olefin sulfonate, alkylnaphthalene sulfonate, lignin sulfonate, succinate sulfonate, fatty alcohol sulfate, and fatty alcohol polyoxyethylene ether sulfate;
wherein a mass fraction of the surfactant in the mixed solution is in a range of 1% to 2%;
wherein the carbon source includes at least one of glucose, sucrose, fructose, ascorbic acid, polyethylene glycol, and polyvinyl alcohol;
wherein a molar ratio of the powder to the carbon source is in a range of 1: (1.5-2.5).

12. The method according to any one of claims 10 to 11, further satisfying one or more of the following conditions:
wherein the heat treatment comprises: heating the mixed solution in a water bath at 120°C to 180°C for 12 h to 18 h;
wherein the drying treatment comprises: vacuum drying the reactive slurry at 50°C to 100°C for 10 h to 24 h;
wherein the calcination treatment comprises: calcining the powder and the carbon source at 500°C to 900°C for 8 h to 12 h in a protective atmosphere.

13. A battery pack, comprising a battery box and a plurality of secondary batteries arranged in the battery box, wherein the plurality of secondary batteries comprise the secondary battery according to any one of claims 1 to 5.

14. An energy storage system, comprising the battery pack according to claim 13.

15. An electric apparatus, comprising the energy storage system according to claim 14.
